# EUROPEAN PATENT APPLICATION

(11) **EP 1 885 143 A1**
(43) Date of publication of application: **06.02.2008**
(21) Application number: 06118495.8
(22) Date of filing: 04.08.2006
(51) Int. Cl.: H04Q 7/38

(54) **System and method for responding to a paging during a communication restriction**

(71) Applicant: Research In Motion Limited, Waterloo, Ontario N2L 3W8 (CA)
(72) Inventor: Suzuki, Takashi, Ichikawa, Chiba 272-0836 (JP); Islam, M. Khaledul, Ottawa, Ontario K2K 3N4 (CA)
(74) Representative: Rickard, David John

(57) **Abstract**

A system and method is provided for a wireless device to respond to a page despite its access class being barred while in an idle mode. The wireless device determines whether the page should be responded to notwithstanding a communication restriction. If the page should be responded to notwithstanding a communication restriction, then the wireless device responds to the page despite its access class being barred. Also provided is a system and method for a network to receive and process a response to the page from the wireless device despite the wireless device's access class being barred while the device is in an idle mode. In some implementations, the network provides the wireless device with information useful for determining whether the page should be responded to notwithstanding a communication restriction.

## Description

The application relates generally to wireless communication, and more particularly to responding to pages.

A wireless network such as a UMTS (Universal Mobile Telecommunications System) network implements access class barring in order to control the communication load on the network. The Access Class indicates the type of access that is permitted by the wireless network. Typically, there are 16 access classes available including 10 access classes for normal operation and 6 access classes for other operation such emergency communication or police communication. Access class for normal operation is typically pre-assigned in a random manner from a pool of 10 classes and stored on a SIM (Subscriber Identity Module) or USIM (Universal Subscriber Identity Module).

To reduce a high communication load on the network, the network may, for example, bar three access classes of the 10 access classes for normal users. UMTS wireless devices that have an RRC (Radio Resource Control) connection with the network and belong to any of the three barred access classes will not lose their RRC connection as a result of the three access classes being barred. However, each wireless device that are in the RRC idle mode, i.e. does not have an RRC connection with the network, and belongs to any of the three barred access classes will not be able to establish an RRC connection. Normally, a UMTS wireless device requests an RRC connection by sending an RRC CONNECTION REQUEST to the network; however, according to the 3GPP (3rd Generation Partnership Project) specification TS25.304, the wireless device is not allowed to send the RRC CONNECTION REQUEST when its access class has been barred. A wireless device uses an RRC connection with the network to access services provided by the network. Therefore, barring the three access classes decreases the communication load on the network by preventing wireless devices from establishing RRC connections with the network. The three access classes may become unbarred at some later time when the communication load on the network has decreased or the network decides to unbar such classes for whatever reasons (e.g. network may allow access classes that were barred and decide to bar new access classes to balance the load).

On an ongoing basis, the network transmits system information using broadcast messages of type 3 over a broadcast channel. The system information includes information of access classes that are barred so that the wireless devices are aware of whether their access classes have been barred. Accordingly, each wireless device in RRC idle mode is aware of whether it is allowed to send an RRC CONNECTION REQUEST to the network to establish an RRC connection.

When a wireless device that does not have an RRC connection and belongs to an access class that has been barred receives a page, the wireless device is not allowed to respond to the page. While this reduces the communication load on the network, it can be a problem if the page is for an important mobile terminated call, such as a call-back from an emergency call centre. For example, a user may have initiated an emergency call, this being allowed as long as the access class 10 is not barred. However, emergency call centre will not be able to call the user if the wireless device enters RRC idle mode after the emergency call ends.

### General

According to one broad aspect, the application preferably provides a method in a wireless device, the wireless device operating within a wireless network, the method comprising: receiving a communication from the wireless network; determining whether a communication restriction has been imposed by the network to restrict responding to the communication; and in the event of the communication restriction: a) determining whether the communication should be responded to notwithstanding a communication restriction; and b) responding to the communication notwithstanding the communication restriction if so determined.

According to another broad aspect, the application preferably provides a wireless device comprising: a wireless access radio adapted to communicate with a wireless network; and a communication response function adapted to: determine whether a communication restriction has been imposed by the network to restrict responding to the communication; and in the event of the communication restriction: a) determine whether the communication should be responded to notwithstanding a communication restriction; and b) respond to the communication notwithstanding the communication restriction if so determined.

According to another broad aspect, the application preferably provides a method comprising: imposing a communication restriction to restrict a wireless device from responding to a communication; transmitting information useful for the wireless device to determine whether a communication should be responded to notwithstanding the communication restriction; transmit the communication.

In some embodiments, the message may be a system information message.

In some embodiments, the communication may comprise an importance indication; and determining whether the communication should be responded to notwithstanding a communication restriction is based on the importance indication and whether the communication is received within the defined time period after transmitting the important communication.

In some embodiments, the method may further comprise: starting a timer after transmitting the important communication, the timer expiring after the defined time period; wherein determining whether the communication is received within the defined time period comprises determining whether the timer is still running when the communication is received.

### Brief Description of the Drawings

Embodiments will now be described with reference to the attached drawings in which:
Figure 1 is a schematic drawing of an example wireless communication system;
Figure 2 is a flowchart of an example method of responding to a page;
Figure 3 is a flowchart of an example method of determining whether a communication restriction has been imposed;
Figures 4 to 6 are flowcharts of example methods of determining whether the page should be responded to notwithstanding a communication restriction;
Figure 7 is a flowchart of another example method of responding to a page;
Figure 8 is a flowchart of an example method of starting a timer upon receipt of an alerting message;
Figure 9 is a flowchart of an example method of receiving and processing a response to the page;
Figure 10 is a flowchart of an example method of imposing a communication restriction;
Figures 11 is a flowchart of an example method of indicating whether the page should be responded to notwithstanding a communication restriction; and
Figure 12 is a flowchart of an example method of indicating a page should be responded to notwithstanding a communication restriction.

### Description of Preferred Embodiments

### Wireless Communication System

According to one broad aspect, the application provides a method in a wireless device, the wireless device operating within a wireless network, the method comprising: receiving a communication from the wireless network; determining whether a communication restriction has been imposed by the network to restrict responding to the communication; and in the event of the communication restriction: a) determining whether the communication should be responded to notwithstanding a communication restriction; and b) responding to the communication notwithstanding the communication restriction if so determined.

According to another broad aspect, the application provides a wireless device comprising: a wireless access radio adapted to communicate with a wireless network; and a communication response function adapted to: determine whether a communication restriction has been imposed by the network to restrict responding to the communication; and in the event of the communication restriction: a) determine whether the communication should be responded to notwithstanding a communication restriction; and b) respond to the communication notwithstanding the communication restriction if so determined.

According to another broad aspect, the application provides a method comprising: imposing a communication restriction to restrict a wireless device from responding to a communication; transmitting information useful for the wireless device to determine whether a communication should be responded to notwithstanding the communication restriction; transmit the communication.

In some embodiments, the message is a system information message.

In some embodiments, the communication comprises an importance indication; and determining whether the communication should be responded to notwithstanding a communication restriction is based on the importance indication and whether the communication is received within the defined time period after transmitting the important communication.

In some embodiments, the method further comprises: starting a timer after transmitting the important communication, the timer expiring after the defined time period; wherein determining whether the communication is received within the defined time period comprises determining whether the timer is still running when the communication is received.

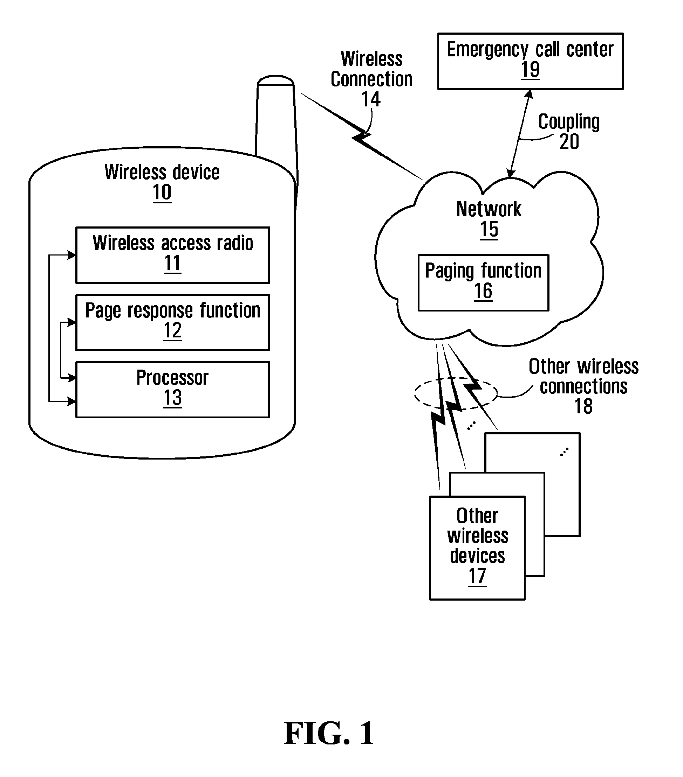

Referring now to Figure 1, shown is a schematic drawing of an example wireless communication system. The wireless communication system has a network 15 coupled to a wireless device 10 via a wireless connection 14, an emergency call center 19 via coupling 20, and other wireless devices 17 via other wireless connections 18. The wireless device 10 has a processor 13 coupled to a wireless access radio 11 and a page response function 12. The wireless device 10 may have other components, but they are not shown for sake of simplicity. The other wireless devices 17 may have similar components to that shown for the wireless device 10. The network 15 has a paging function 16 and may also have other components, but they are not shown for sake of simplicity. The wireless communication system may have other components, but they are not shown for sake of simplicity.

Note that while the figures and description refer to the transmission of a page with paging function 16 and responding thereto with page response function 12, more generally, some embodiments are applicable to the transmission of a communication from the network and the response thereto during a communication restriction. In such embodiments, a communication function and communication response function would replace paging function 16 and paging response function 12 respectively.

In operation, the wireless device 10 is adapted to communicate with the network 15 over the wireless connection 14 using its wireless access radio 11. The communication may for example be with one of the other wireless devices 17 or the emergency call center 19. If the communication is initiated by another party, for example the emergency call center, then the network transmits a page to the wireless device 10 to initiate the communication. A response to the page allows communication between the wireless device 10 and the other party to begin.

In some instances, the network 15 imposes a communication restriction that restricts the wireless device 10 from accessing the network, and this includes restricting the wireless device 10 from responding to the page. The restriction may be imposed by the network for example to reduce or balance the communication load on the network. The restriction may for example be access class barring. While the network imposes access class barring to control communication load on the network, it can be a problem if the page for a mobile terminated call is of high importance, such as a call-back from an emergency call center. Therefore, there is a need to allow the wireless device to establish a connection with the network so that it may respond to important calls despite its access class being barred.

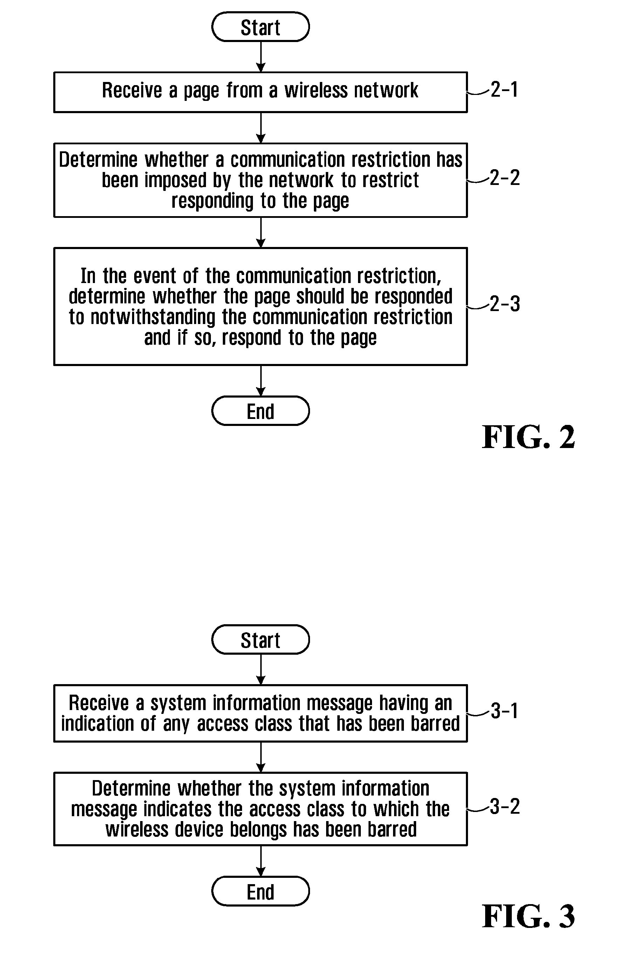

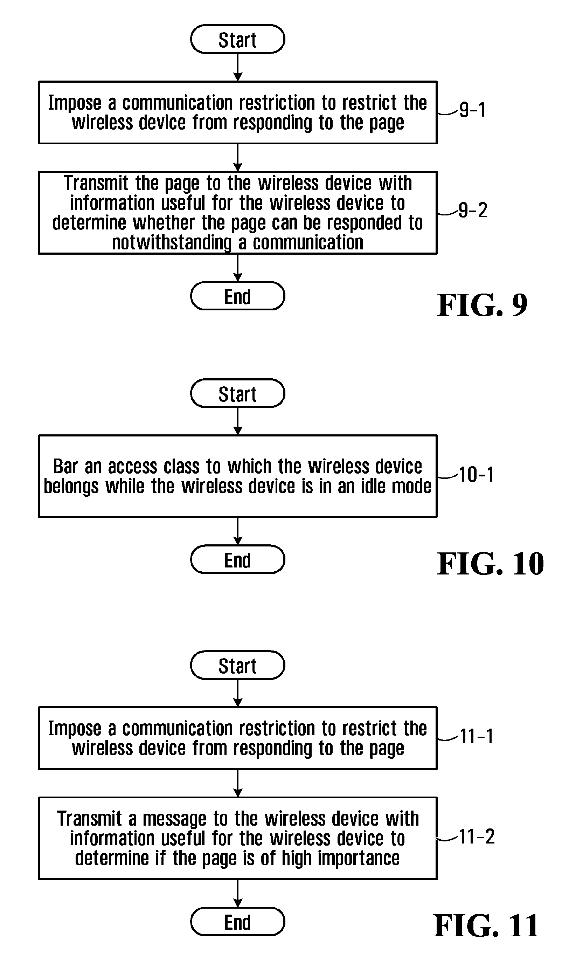

According to an aspect of the application, the page response function 12 implements functionality for the wireless device 10 to respond to the page notwithstanding the communication restriction if the page has been determined to be of high importance. Therefore, important communication is enabled during the communication restriction while unimportant communication remains restricted. Further example details are provided with reference to Figures 2 through 8. According to another aspect of the application, the paging function 16 implements functionality for the network 15 to receive and process a response to the page from the wireless device 10 notwithstanding the communication restriction. Further example details are provided with reference to Figures 9 through 12.

It is to be understood that references to communication as being important or of high importance does not necessarily mean that the communication is in fact an important communication. Instead, it refers to communication that has been determined to be important according to one or more criterion. While the one or more criterion is designed so as to accurately identify important communication from other communication, it may be possible that an unimportant communication is erroneously determined to be important. There are many possibilities for the one or more criterion. Examples are provided below.

In some implementations, the page response function 12 is software implemented and is executed on the processor 13. However, more generally, the page response function 12 may be implemented as software, hardware, firmware, or any appropriate combination thereof. While the page response function 12 is shown as part of the wireless device 10, more generally it may be implemented on one or more wireless devices of the wireless communication system. In some embodiments, all of the wireless devices of the wireless communication system have such a page response function.

In some implementations, paging function 16 is software implemented and is executed on a processor (not shown). However, more generally, the paging function 16 may be implemented as software, hardware, firmware, or any appropriate combination thereof. Although shown as a single component, more generally, the paging function 16 may have one or more components. The one or more components may be distributed throughout the network 15 or located on a single network element. The one or more components may be integrated with other components of the network 15.

In some implementations, the network 15 is a UMTS (Universal Mobile Telecommunications System) network. However, more generally, the network 15 may be any appropriate network such as a UMTS network, a GSM network, or a CDMA network.

### Methods of Responding to a Page

Referring now to Figure 2, shown is a flowchart of an example method of responding to a page. This method may be implemented in a wireless device, for example by the page response function 12 of the wireless device 10 shown in Figure 1. At step 2-1, the wireless device receives a page from the wireless network. At step 2-2, the wireless device determines whether a communication restriction has been imposed by the network to restrict responding to the page. At step 2-3, in the event of the communication restriction, the wireless device determines whether the page is of high importance and responds to the page notwithstanding the communication restriction if the page has been determined to be of high importance.

There are many ways that the wireless device can transmit the response to the page. In some implementations, the wireless device establishes a connection to the network and transmits the response to the page over the connection. In specific implementations, the connection is an RRC (Radio Resource Control) connection and establishing the RRC connection involves transmitting an RRC CONNECTION REQUEST message. Other implementations are possible.

There are many ways that the wireless device can determine if a communication restriction has been imposed by the network to restrict responding to the page. Referring now to Figure 3, shown is a flowchart of an example method of determining whether a communication restriction has been imposed. This method may be implemented in a wireless device, for example by the page response function 12 of the wireless device 10 shown in Figure 1. At step 3-1, the wireless device receives a system information message having an indication of any access class that has been barred. Such messages are broadcast on an ongoing basis by the network over a predefined frequency. At step 3-2, the wireless device determines whether the system information message indicates the access class to which the wireless device belongs has been barred. If the wireless device belongs to an access class that has been barred and the wireless device is in an idle mode, then the wireless device is restricted from transmitting and receiving communications.

In some implementations, while the access class of the wireless device is barred the wireless device can transmit communications using another access class other than the access class to which the wireless device belongs. For example, in some implementations, the wireless device can transmit communications to an emergency call center using an emergency access class. Typically, the emergency access class is not barred so as to allow emergency communication as much as possible. Therefore, when the wireless device belongs to an access class that has been barred and the wireless device is in an idle mode, the wireless device can still make an emergency call using the emergency access class.

In some instances, the user of the wireless device calls the emergency call center, but for whatever reason the user is not able to complete their communication. For example, the wireless connection between the wireless device and the wireless network may be poor and become inoperable during their conversation. Therefore, the call terminates prematurely. In such a scenario the operator at the emergency call center may attempt to call back the user of the wireless device. As another example, the user is not able to speak directly with an operator and instead leaves a voice message. In such a scenario, an operator may attempt to call back the user of the wireless device.

The call-back from the emergency call center is a mobile terminated call involving the network transmitting a page to the wireless device to setup the call. However, in some implementations, the page is transmitted using the access class to which the wireless device belongs and not the emergency access class. In some implementations call-back from the emergency call center is not indicated in the paging message. Accordingly, the wireless device is restricted in responding to the page. The wireless device is restricted regardless of whether the access class to which the wireless device belongs is barred before or after the initial call to the emergency call centre. This is an example of an important communication to which the wireless device might be permitted to respond using the methods described herein.

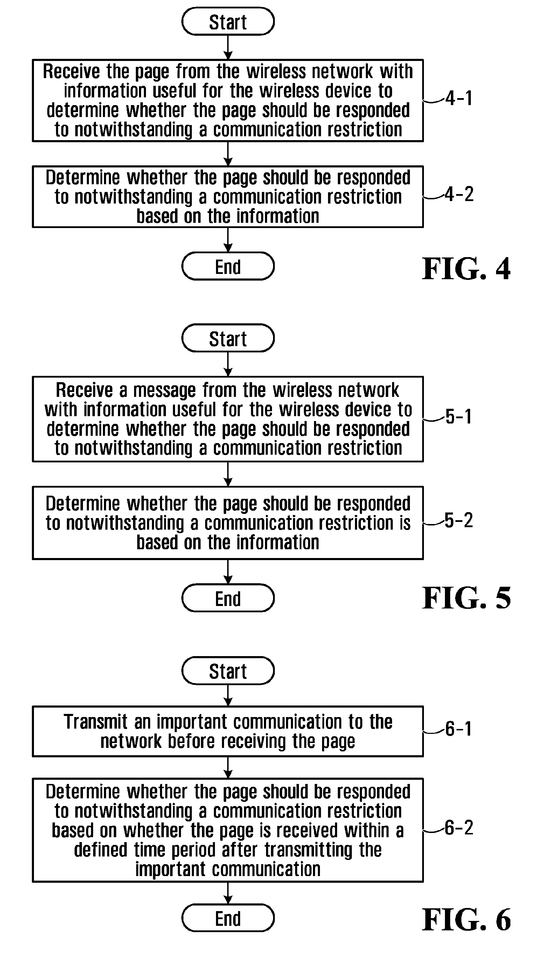

There are many ways that the wireless device can determine whether the page should be responded to notwithstanding a communication restriction. Referring now to Figures 4 to 6, shown are flowcharts of example methods of determining whether the page should be responded to notwithstanding a communication restriction. Any one or more of these methods may be implemented in a wireless device, for example by the page response function 12 of the wireless device 10 shown in Figure 1.

Referring first to Figure 4, at step 4-1 the wireless device receives the page from the wireless network with information useful for the wireless device to determine whether the page should be responded to notwithstanding a communication restriction. At step 4-2, the wireless device determines whether the page should be responded to notwithstanding a communication restriction based on the information.

There are many possibilities for the information useful for the wireless device to determine whether the page should be responded to notwithstanding a communication restriction. In some implementations, the information contains an importance indication if the page should be responded to notwithstanding a communication restriction. Accordingly, the wireless device can determine whether the page should be responded to notwithstanding a communication restriction based on the importance indication. In other implementations, the information contains timer information indicating how long after a previous important communication to consider subsequent communications important. The timing information can be used by the wireless device to infer that the page is related to the previous communication. Specific examples of this approach are detailed below.

There are many ways that the page can be provided with the information useful for the wireless device to determine whether the page should be responded to notwithstanding a communication restriction. In a specific example, an importance indication is represented by a single bit within the page. Accordingly, the wireless device decodes the single bit to determine whether the page should be responded to notwithstanding a communication restriction. Other implementations are possible.

Referring now to Figure 5, shown is a flowchart of another example method of determining whether the page should be responded to notwithstanding a communication restriction. At step 5-1 the wireless device receives a message from the wireless network with information useful for the wireless device to determine whether the page should be responded to notwithstanding a communication restriction. The message having the information is separate and distinct from the page. At step 5-2, the wireless device determines whether the page should be responded to notwithstanding a communication restriction is based on the information.

There are many possibilities for the message. In some implementations, the message is a system information message that conveys common information to all the wireless devices. Other implementations are possible.

There are many ways that the message can be provided with the information useful for the wireless device to determine whether the page should be responded to notwithstanding a communication restriction. In a specific example, timing information is represented by a plurality of bits within the message. The information can be conveyed by the wireless network, for example in a system information message. Accordingly, the wireless device decodes the plurality of bits to determine the timing information.

### Other implementations are possible.

Referring now to Figure 6, shown is a flowchart of yet another example method of determining whether the page should be responded to notwithstanding a communication restriction. At step 6-1 the wireless device transmits an important communication to the network before receiving the page. At step 6-2, the wireless device determines whether the page should be responded to notwithstanding a communication restriction based on whether the page is received within a defined time period after transmitting the important communication.

There are many possibilities for the important communication. The important communication may for example be communication with an emergency call center. Other possibilities exist. In some embodiments, the wireless device maintains a record of emergency numbers such as 911 and compare the number called against the maintained record to determine if the communication is important.

There are many possibilities for the defined time period. In some implementations, the defined time period is designed as appropriate so that the wireless device may reasonably infer that the page is in response to the important communication. In some implementations, the defined time period is dynamic. In other implementations, the defined time period is static. In specific implementations when a network-defined time period is not available, the defined time period can be predefined on the mobile device e.g. 60 seconds. Other implementations are possible.

There are many ways to determine whether the page is received within the defined time period after transmitting the important communication. In some implementations, a timer is started after completing the important communication such that the timer expires upon the defined time period. If the timer is running, then there has been important communication in the past defined time period. If the timer is not running, then there has not been important communication in the past defined time period. It is to be understood that the use of a timer in this manner is a very specific implementation for example purposes only. Other implementations with or without the use of a timer are possible. Examples have been provided above in which the wireless device receives timing information from the network.

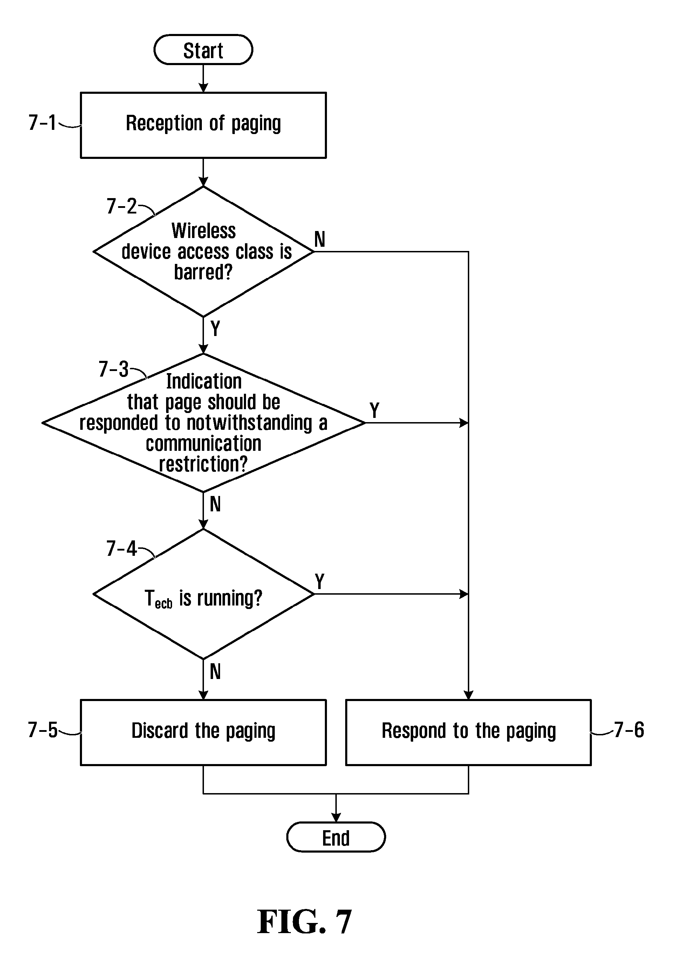

Referring now to Figure 7, shown is a flowchart of another example method of responding to a page. This method may be implemented in a wireless device, for example by the page response function 12 of the wireless device 10 shown in Figure 1. It is to be understood that the example method is very specific for example purposes only.

If at step 7-1 the wireless device receives a page, then at steps 7-2 through 7-4 the wireless device determines whether to discard the page at step 7-5 or respond to the page at step 7-6. If at step 7-2 the wireless device's access class is not barred, then at step 7-6 the wireless device responds to the page. Otherwise, at step 7-3 the wireless device determines whether there is an importance indication in the page. If there is an importance indication indicating that the page is important, then at step 7-6 the wireless device responds to the page. Otherwise, at step 7-4 the wireless device determines if a timer, T_{ecb} (timer for emergency call backer), is running. The timer T_{ecb} is started after completion of important communication and expires after a defined time period. Therefore, if T_{ecb} is still running, then the page has been received within the defined time period after the important communication. If T_{ecb} is running, then at step 7-6 the wireless device responds to the page. Otherwise, the wireless device discards the page at step 7-5. This allows the mobile device to respond to callers outside of the emergency call centre in an emergency situation.

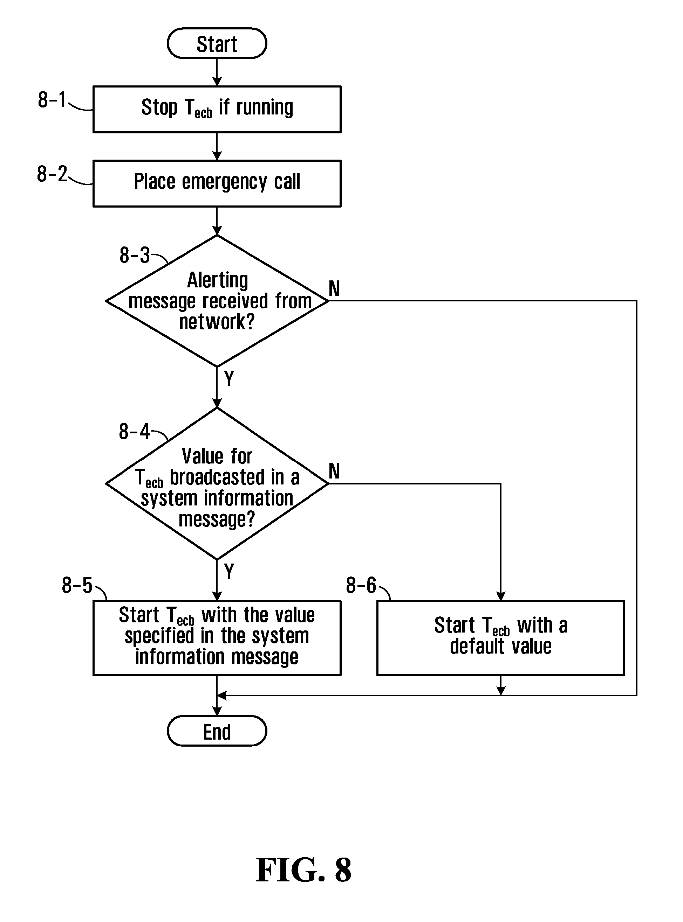

There are many ways that the timer T_{ecb} can be started. Referring now to Figure 8, shown is a flowchart of an example method of starting the timer upon receipt of an alerting message. This method may be implemented in a wireless device, for example by the page response function 12 of the wireless device 10 shown in Figure 1. It is to be understood that the example method is very specific for example purposes only.

At step 8-1, the wireless device stops the timer T_{ecb} if it is running. T_{ecb} is started after the most recent emergency call being made. The timer will already be running when processing a current emergency call if the user calls two emergency call numbers in a short period. At step 8-2, the wireless device places an emergency call, for example to an emergency call centre. As previously described, there may be situations in which the emergency call ends prematurely. At step 8-3, an ALERTING message may be received that indicates that the receiving side (e.g. the emergency call centre) has received a call setup request and is ringing the caller. More generally, any form of acknowledgement from the network that enables the device to determine that network was made aware of emergency call/attempt is contemplated, for example as RRC connection setup in response to RRC connection request with establishment cause = "Emergency Call". If at step 8-4 the wireless device receives an ALERTING message, then the timer T_{ecb} is to be started. The timer T_{ecb} is started with an initial value that depends on whether a value is received in a system information message. If at step 8-4 the wireless device receives a value for the timer T_{ecb}, then at step 8-5 the timer T_{ecb} is started with the value specified in the system information message. In this manner, the network has provided timing information for the wireless device to determine a time window during which a received page can be responded to notwithstanding whether there is a communication restriction to restrict responding to the page. However, if the value for the timer T_{ecb} is not received in a system information message, then at step 8-6 the wireless device starts the timer T_{ecb} with a default value. The default value may for example be 60 seconds. In this manner, the wireless device determines a default time window during which a received page can be responded to notwithstanding whether there is a communication restriction to restrict responding to the page.

### Methods of Paging

Referring now to Figure 9, shown is a flowchart of an example method a network participating in allowing a wireless device to respond to a page notwithstanding a communication restriction. This method may be implemented in a network, for example by the paging function 16 of the network 15 shown in Figure 1. At step 9-1, the network imposes a communication restriction to restrict the wireless device from responding to the page. Alternatively, the communication restriction can be imposed before the page is transmitted or at the same time the page is transmitted. At step 9-2, the network transmits a page to the wireless device with information useful for the wireless device to determine whether the page should be responded to notwithstanding the communication restriction. There are many ways that the network can impose a communication restriction to restrict the wireless device from responding to the page for the communication restriction. Referring now to Figure 10, shown is a flowchart of an example method of imposing a communication restriction. This method may be implemented in a network, for example by the paging function 16 of the network 15 shown in Figure 1. At step 10-1, the network bars an access class to which the wireless device belongs while the wireless device is in an idle mode. The wireless device may or may not be in the idle mode when the access class to which the wireless device belongs is initially barred. However, once the wireless device is the idle mode while its access class is being barred, then the wireless device's ability to establish a connection with the network is restricted. Therefore, the wireless device is restricted from responding to the page.

Restricting the wireless device's ability to respond to the page reduces the communication load on the network. However, if the page should be responded to notwithstanding a communication restriction, then the wireless device is able to respond to the page. In some implementations, the network transmits information to the wireless device that is useful for the wireless device to determine whether the page should be responded to notwithstanding a communication restriction. In other implementations, the network does not transmit such information to the wireless device. Accordingly, the wireless device determines whether the page should be responded to notwithstanding a communication restriction without the information from the network. In some implementations, the network transmits such information in certain circumstances while not transmitting the information in other circumstances. Such circumstances could be for example whether the network has such information available.

There are many ways that the network can provide the wireless device with the information useful for the wireless device to determine whether the page should be responded to notwithstanding a communication restriction. Referring now to Figure11, shown is a flowchart of an example method of providing information useful for the wireless device to determine whether a page should be responded to notwithstanding a communication restriction. This method may be implemented in a network, for example by the paging function 16 of the network 15 shown in Figure 1.

Referring first to Figure 11, at step 11-1, the network imposes a communication restriction to restrict the wireless device from responding to the page. Alternatively, the communication restriction can be imposed before the page is transmitted or at the same time the page is transmitted. At step 11-2 the network transmits a message to the wireless device with information useful for the wireless device to determine if a subsequent page should be responded to notwithstanding a communication restriction. The message may for example be a system information message. There are many ways that the message can be provided with the information useful for the wireless device to determine whether the page should be responded to notwithstanding a communication restriction. Examples have been provided above and are therefore not repeated.

There are many possibilities for the information useful for the wireless device to determine whether the page should be responded to notwithstanding a communication restriction. In some implementations, if the network determines that the page should be responded to notwithstanding a communication restriction, then the information contains an importance indication indicating that the page should be responded to notwithstanding a communication restriction. In other implementations, the information contains timing information indicating a time period following a previous import communication within which communications from the wireless device are to be permitted. Therefore, if the wireless device has recently transmitted important communication, then the timing information will indicate this and the wireless device may infer that the page is related to the important communication. Other implementations are possible.

There are many ways that the network can determine if the page should be responded to notwithstanding a communication restriction. In some implementations, if the page is to establish a call-back from an emergency call center, then the network determines that the page should be responded to notwithstanding a communication restriction. However, if the page is to establish some other normal mobile terminated call, then the network determines that the page is not of high importance. Other implementations are possible.

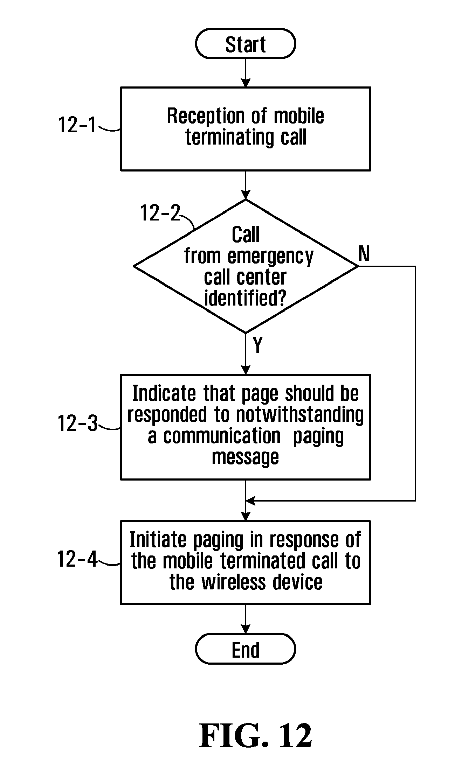

Referring now to Figure 12, shown is a flowchart of an example method of indicating that a page should be responded to notwithstanding a communication restriction. This method may be implemented in a network, for example by the paging function 16 of the network 15 shown in Figure 1. It is to be understood that the example method is very specific for example purposes only.

If at step 12-1 the network receives a mobile terminated call, then at step 12-2 the network determines whether the mobile terminated call is a call from an emergency call center. If the network determines that the mobile terminated call is a call from an emergency call center, then at step 12-3 the network indicates a page should be responded to notwithstanding a communication restriction in a paging message using an importance indication before initiating paging in respect of the mobile terminated call at step 12-4. The importance indication allows the wireless device to determine whether the page should be responded to notwithstanding a communication restriction. However, if the network does not determine that the mobile terminated call is a call from an emergency call center, then at step 12-4 the network initiates paging to the wireless device without an importance indication.

Numerous modifications and variations of the present application are possible in light of the above teachings. It is therefore to be understood that within the scope of the appended claims, the application may be practised otherwise than as specifically described herein.

## Claims

1. A method in a wireless device, the wireless device operating within a wireless network, the method comprising:
receiving a communication from the wireless network (2-1);
determining whether a communication restriction has been imposed by the network to restrict responding to the communication (2-2); and
in the event of the communication restriction:
determining whether the communication should be responded to notwithstanding the communication restriction (2-3); and
responding to the communication notwithstanding the communication restriction if so determined.

2. The method of claim 1 wherein the communication is a page.

3. The method of claim 1 or claim 2 wherein determining whether the communication should be responded to notwithstanding a communication restriction comprises:
determining if there is an importance field in the communication that indicates the communication to be of high importance in which case the communication should be responded to notwithstanding a communication restriction (4-1,4-2); and
determining if the communication has been received within a certain time since the wireless device initiated an important communication in which case the communication should be responded to notwithstanding a communication restriction (6-2).

4. The method of any one of the preceding claims wherein determining whether the communication restriction has been imposed comprises:
determining whether the wireless device belongs to an access class that has been barred and whether the wireless device is in an idle mode.

5. The method of claim 4 wherein determining whether the wireless device belongs to an access class that has been barred comprises:
receiving a system information message, the system information message comprising an indication of any access class that has been barred (3-1); and
determining whether the system information message indicates the access class to which the wireless device belongs has been barred (3-2).

6. The method of any one of the preceding claims wherein responding to the communication notwithstanding the communication restriction comprises:
establishing a connection to the network; and
transmitting a response to the communication over the connection.

7. The method of claim 6 wherein:
the connection is an RRC (Radio Resource Control) connection; and
establishing the RRC connection comprises transmitting an RRC CONNECTION REQUEST message.

8. The method of any one of the preceding claims wherein:
the communication comprises information useful for the wireless device to determine whether the communication should be responded to notwithstanding a communication restriction (4-1); and
determining whether the communication should be responded to notwithstanding a communication restriction is based on the information (4-2).

9. The method of claim 8 wherein:
the information useful for the wireless device comprises an importance indication; and
determining whether the communication should be responded to notwithstanding a communication restriction is based on the importance indication.

10. The method of any one of claims 1 to 7 further comprising:
receiving a message from the wireless network, the message comprising information useful for the wireless device to determine whether the communication should be responded to notwithstanding a communication restriction (5-1) ;
wherein determining whether the communication should be responded to notwithstanding a communication restriction is based on the information (5-2).

11. The method of any one of claims 1 to 7 further comprising:
transmitting an important communication to the network before receiving the communication (6-1);
wherein determining whether the communication should be responded to notwithstanding a communication restriction is based on whether the communication is received within a defined time period after transmitting the important communication (6-2).

12. The method of claim 11 wherein the important communication comprises communication to an emergency call center.

13. A computer readable medium having computer executable instructions stored thereon for execution on a processor so as to cause a computing device to implement the method of any one of the preceding claims.

14. A wireless device (10) comprising:
a wireless access radio (11) adapted to communicate with a wireless network; and
a communication response function (12) adapted to:
determine whether a communication restriction has been imposed by the network to restrict responding to the communication (2-2); and
in the event of the communication restriction:
determine whether the communication should be responded to notwithstanding a communication restriction (2-3); and
respond to the communication notwithstanding the communication restriction if so determined (2-3).

15. A method comprising:
imposing a communication restriction to restrict a wireless device from responding to a communication (9-1);
transmitting information useful for the wireless device to determine whether a communication should be responded to notwithstanding the communication restriction (9-2,11-2);
transmit the communication (9-2).

16. The method of claim 15 wherein transmitting information useful for the wireless device to determine whether a communication should be responded to notwithstanding the communication restriction comprises transmitting the information as part of the communication (9-2).

17. The method of claim 15 wherein transmitting information useful for the wireless device to determine whether a communication page should be responded to notwithstanding the communication restriction comprises transmitting the information as part of message distinct from the communication (11-2).

18. The method of any one of claims 15 to 17 wherein the information comprises an importance indication.

19. The method of any one of claims 15 to 17 wherein the information comprises timing information indicating how long after a previous important communication from the wireless device the wireless device is allowed to respond.

20. A network (15) adapted to implement the method of any one of claims 15 to 19.

21. A computer readable medium having computer executable instructions stored thereon for execution on a processor so as to cause a computing device to implement the method of any one of claims 15 to 19.

## Amended claims

### Amended claims in accordance with Rule 137(2) EPC.

**1.** A method in a wireless device, the wireless device operating within a wireless network, the method comprising:
receiving a communication from the wireless network (2-1) ;
determining whether a communication restriction has been imposed by the network to restrict responding to the communication (2-2); and
in the event of the communication restriction:
determining whether the communication should be responded to notwithstanding the communication restriction (2-3); and
responding to the communication notwithstanding the communication restriction if so determined.

**2.** The method of claim 1 wherein the communication is a page.

**3.** The method of claim 1 or claim 2 wherein determining whether the communication should be responded to notwithstanding a communication restriction comprises:
determining if there is an importance field in the communication that indicates the communication to be of high importance in which case the communication should be responded to notwithstanding a communication restriction (4-1,4-2); and
determining if the communication has been received within a certain time since the wireless device initiated an important communication in which case the communication should be responded to notwithstanding a communication restriction (6-2);
wherein a communication is determined to be important according to one or more criteria.

**4.** The method of any one of the preceding claims
wherein determining whether the communication restriction has been imposed comprises:
determining whether the wireless device belongs to an access class that has been barred and whether the wireless device is in an idle mode.

**5.** The method of claim 4 wherein determining whether the wireless device belongs to an access class that has been barred comprises:
receiving a system information message, the system information message comprising an indication of any access class that has been barred (3-1); and
determining whether the system information message indicates the access class to which the wireless device belongs has been barred (3-2).

**6.** The method of any one of the preceding claims
wherein responding to the communication notwithstanding the communication restriction comprises:
establishing a connection to the network; and
transmitting a response to the communication over the connection.

**7.** The method of claim 6 wherein:
the connection is an RRC (Radio Resource Control) connection; and
establishing the RRC connection comprises transmitting an RRC CONNECTION REQUEST message.

**8.** The method of any one of the preceding claims
wherein:
the communication comprises information for the wireless device to determine whether the communication should be responded to notwithstanding a communication restriction (4-1); and
determining whether the communication should be responded to notwithstanding a communication restriction is based on the information (4-2).

**9.** The method of claim 8 wherein:
the information for the wireless device comprises an importance indication; and
determining whether the communication should be responded to notwithstanding a communication restriction is based on the importance indication.

**10.** The method of any one of claims 1 to 7 further comprising:
receiving a message from the wireless network, the message comprising information for the wireless device to determine whether the communication should be responded to notwithstanding a communication restriction (5-1);
wherein determining whether the communication should be responded to notwithstanding a communication restriction is based on the information (5-2).

**11.** The method of any one of claims 1 to 7 further comprising:
transmitting an important communication as determined by one or more criteria to the network before receiving the communication (6-1);
wherein determining whether the communication should be responded to notwithstanding a communication restriction is based on whether the communication is received within a defined time period after transmitting the important communication (6-2).

**12.** The method of claim 11 wherein the important communication comprises communication to an emergency call center.

**13.** The method of any preceding claim wherein determining whether a communication restriction has been opposed by the network to restrict responding to the communication comprises:
determining if the communication was received using an access class that was barred by the network.

**14.** A computer readable medium having computer executable instructions stored thereon for execution on a processor so as to cause a computing device to implement the method of any one of the preceding claims.

**15.** A wireless device (10) comprising:
a wireless access radio (11) adapted to communicate with a wireless network; and
a communication response function (12) adapted to:
determine whether a communication restriction has been imposed by the network to restrict responding to the communication (2-2); and
in the event of the communication restriction:
determine whether the communication should be responded to notwithstanding a communication restriction (2-3); and
respond to the communication notwithstanding the communication restriction if so determined (2-3).

**16.** A method comprising:
imposing a communication restriction to restrict a wireless device from responding to a communication (9-1);
transmitting information for the wireless device to determine whether a communication should be responded to notwithstanding the communication restriction (9-2,11-2);
transmitting the communication (9-2).

**17.** The method of claim 16 wherein transmitting information for the wireless device to determine whether a communication should be responded to notwithstanding the communication restriction comprises transmitting the information as part of the communication (9-2).

**18.** The method of claim 16 wherein transmitting information for the wireless device to determine whether a communication page should be responded to notwithstanding the communication restriction comprises transmitting the information as part of message distinct from the communication (11-2).

**19.** The method of any one of claims 16 to 18 wherein the information comprises an importance indication.

**20.** The method of any one of claims 16 to 18 wherein the information comprises timing information indicating how long the wireless device is allowed to respond after a previous important communication from the wireless device determined by one or more criteria.

**21.** The method of any of claims 16 to 20 wherein imposing a communication restriction to restrict a wireless device for transmitting to the communication comprises:
barring an access class;
wherein transmitting the communication comprises transmitting the communication using the access class that was barred.

**22.** A network (15) adapted to implement the method of any one of claims 16 to 20.

**23.** A computer readable medium having computer executable instructions stored thereon for execution on a processor so as to cause a computing device to implement the method of any one of claims 16 to 21.
